# EUROPEAN PATENT SPECIFICATION

(11) **EP 1 373 405 B1**
(45) Date of publication and mention of the grant of the patent: **24.05.2006**
(21) Application number: 01910200.3
(22) Date of filing: 06.03.2001
(51) Int. Cl.: C08L 25/06, C08L 51/04

(54) **FLAME RETARDANT SYNDIOTACTIC POLYSTYRENE RESIN COMPOSITION**
FLAMMWIDRIGE HARZZUSAMMENSETZUNG MIT SYNDIOTAKTISCHEM POLYSTYROL
COMPOSITION DE RESINE DE POLYSTYRENE SYNDIOTACTIQUE IGNIFUGEANT

(30) Priority: 23.02.2001 KR 2001009308
(43) Date of publication of application: 02.01.2004
(73) Proprietor: Samsung General Chemicals Co., Ltd., Seosan-shi, Chungcheongnam-do 356-870 (KR)
(72) Inventor: ZHANG, Xuequan, Taejeon 305-390 (KR); LIM, Jae, Gon, Taejeon 305-390 (KR); JANG, Bok, Nam, Uiwang-shi, Kyunggi-do 437-010 (KR); KIM, Hyun, Joon, Yongin-shi 449-130 Gyeonggi-do (KR); BAIK, Jung, Hyun, Taegu 706-050 (KR); WOO, Sang Sun, Seoul 137-070 (KR)
(74) Representative: Grünecker, Kinkeldey, Stockmair & Schwanhäusser Anwaltssozietät
(86) International application number: PCT/KR2001/000339
(87) International publication number: WO 2002/068532

(56) References cited:
- JP-A- 7 090 157
- KR-A- 2001 008 688
- KR-A- 2001 027 880

## Description

### Field of the Invention

The present invention relates to a syndiotactic polystyrene resin composition using a halogen-free flame retardant, which provides good flame retardancy as well as sufficient other physical properties. More particularly, the present invention relates to a syndiotactic polystyrene resin composition that can show good impact strength by containing a rubber component and good flame retardancy by using a halogen-free flame retardant.

### Background of the Invention

Syndiotactic polystyrene is a very attractive polymer. The polymer shows low specific gravity, low dielectric constant, high flexural modulus, good heat resistance, good rigidity, high melting point (Tₘ) of about 270°C and excellent resistance to chemicals. Accordingly the syndiotactic polystyrene has become a promising material for various applications in the automotive, electronic and packaging industries. However, the applications of the syndiotactic polystyrene resin composition are severely limited because impact strength is too low. To overcome such shortcoming, an impact modifying material such as rubber and various compatibility agents for the syndiotactic polystyrene and the impact modifying material have been used in the syndiotactic polystyrene resin composition.

U.S. Patent No. 5,270,353 to Nakano et al. discloses a styrene-based resin composition comprising a styrene-based polymer having a syndiotactic configuration and no functional group, a styrene-based polymer having an epoxy group and an inorganic filler surface treated by a silane compound or a titanium compound.

U.S. Patent No. 5,352,727 to Okada discloses a polystyrene composition comprising syndiotactic polystyrene and a syndiotactic polystyrene impact modifier, said syndiotactic polystyrene impact modifier being the reaction product of a syndiotactic polystyrene having a first reactive functional group, and a rubbery elastomer containing a second reactive functional group, said first and second reactive functional groups being reactive with each other.

U.S. Patent No. 5,391,603 to Wessel et al. discloses a composition comprising a syndiotactic, vinyl aromatic thermopalstic resin, a rubbery, impact absorbing domain forming polymer, a nucleator for the syndiotactic, vinyl aromatic thermoplastic resin, a mineral, glass, ceramic, polymeric or carbon reinforcing agent, and one or more polyarylene ethers or polar group modified polyarylene ethers.

U.S. Patent No. 5,543,462 to Okada et al. discloses an impact resistant polystyrene composition comprising a styrenic polymer having syndiotactic configuration and a rubbery elastomer modified by a modifier having a polar group, and optionally a rubbery elastomer and/or a poly(phenylene ether).

U.S. Patent No. 5,654,365 to Havriliak, Jr. et al. discloses a syndiotactic polystyrene composition impact-modified by a blend of polystyrene- hydrogenated polybutadiene block copolymers and one or more core/shell modifiers based on a lightly or non-crosslinked rubber core.

U.S. Patent No. 5,760,105 to Okada et al. discloses a styrenic resin composition comprising a styrenic polymer having syndiotactic configuration (sPS) or modified sPS, a thermoplastic resin having a polar group, a rubbery elastomer having affinity for the sPS and a compatibilizer having a polar group.

U.S. Patent No. 5,777,028 to Okada et al. discloses an impact resistant polystyrene composition comprising a styrenic polymer having syndiotactic configuration, a rubbery elastomer having an olefinic component or a polyolefin and a styrene/olefin block or graft copolymer having a microphase separation temperature of 180 °C.

Idemitsu Co. of Japan had sold a syndiotactic polystyrene resin composition which is reinforced with glass fibers to improve impact strength and employs a halogen-containing flame retardant.

There are two flame retardants for use of a resin composition, a halogen-containing flame retardant and a halogen-free flame retardant. The halogen-containing flame retardant includes bromides and chlorides and the halogen-free flame retardant includes phosphoric acid esters.

Resin compositions containing a halogen-containing flame retardant have good flame retardancy and resistance to chemicals. However, the resin compositions have poor resistance to weather, become poor in heat stability during molding process at high temperature to generate halogenated gases resulting erosion of the mold, and generate toxic gases during combustion to cause an environmental problem. On the other hand, resin compositions containing a phosphoric acid ester of the halogen-free flame retardant form a great deal of char due to carbonization, dehydration and additional plasticization.

The present inventors has filed two Korean patent applications (Korean Application Nos. 1999-39858 and 1999-39859), which relate to syndiotactic polystyrene compositions having an improved flame retardancy as well as maintaining mechanical strength and impact strength.

The present inventors have developed a new syndiotactic polystyrene resin composition which comprises (a) a syndiotactic polystyrene, (b) a hydrogenated styrene/butadiene/styrene block copolymer (SEBS) as a rubber component to improve impact strength of the resin composition, (c) a hydrogenated styrene/butadiene/styrene - graft - maleic anhydride (SEBS-MA) as a first compatibilizer to improve compatibility between the syndiotactic polystyrene and the rubber, (d) polyphenyleneoxide (PPO) as a second compatibilizer to improve compatibility between the syndiotactic polystyrene and the rubber, and (e) a phosphoric acid ester as a halogen-free flame retardant.

### Objects of the Invention

A feature of the present invention is the provision of a syndiotactic polystyrene resin composition which is not harmful to human bodies and does not cause a n environmental problem by employing phosphoric acid ester as a halogen-free flame retardant.

Another feature of the present invention is the provision of a syndiotactic polystyrene resin composition having an improved impact strength by containing a hydrogenated styrene/butadiene/styrene block copolymer (SEBS) as a rubber component.

A further feature of the present invention is the provision of a syndiotactic polystyrene resin composition having good physical properties which are required for various applications thereof.

Other objects and advantages of this invention will be apparent from the ensuing disclosure and appended claims.

### Summary of the Invention

The syndiotactic polystyrene resin composition according to the present invention comprises (a) 100 parts by weight of a syndiotactic polystyrene, (b) about 1 - 50 parts by weight of a hydrogenated styrene/butadiene/styrene block copolymer (SEBS) as a rubber component to improve impact strength of the resin composition, (c) about 1 ~ 15 parts by weight of a hydrogenated styrene/butadiene/styrene - graft - maleic anhydride (SEBS-MA) as a first compatibilizer to improve compatibility between the syndiotactic polystyrene and the rubber, (d) about 1 - 90 parts by weight of polyphenyleneoxide (PPO) as a second compatibilizer to improve compatibility between the syndiotactic polystyrene and the rubber, and (e) about 1 ~ 60 parts by weight of a phosphoric acid ester as a halogen-free flame retardant. The syndiotactic polystyrene resin composition may optionally include (f) about 1 ~ 70 parts by weight of glass fibers.

### Detailed Description of the Invention

The syndiotactic polystyrene resin composition according to the present invention comprises (a) a syndiotactic polystyrene, (b) a hydrogenated styrene/butadiene/styrene block copolymer (SEBS) as a rubber component, (c) a hydrogenated styrene/butadiene/styrene - graft - maleic anhydride (SEBS-MA) as a first compatibilizer, (d) polyphenyleneoxide (PPO) as a second compatibilizer, and (e) a phosphoric acid ester as a halogen-free flame retardant. All the components will be described in detail as follow:

### (A) Syndiotactic Polystyrene (sPS)

In general, polystrenes are classified into an atactic, an isotactic and a syndiotactic structure depending on the position of benzene rings as side chains. An atactic polystyrene has an irregular arrangement of the benzene rings and an isotactic polystyrene has an arrangement that the benzene rings are positioned at one side of the polymer main chain. On the other hand, a syndiotactic polystyrene has a regularly alternating arrangement of the benzene rings.

The syndiotactic polystyrenes are prepared with styrene monomers under the catalyst system a metallocene catalyst and a cocatalyst. The metallocene catalyst has a bridged structure of a complex of Group IV transition metals such as Ti, Zr, Hf etc. in the Periodic Table and a ligand having one or two cycloalkane dienyl groups such as cyclopentadienyl group, indenyl groups, fluorenyl groups, and derivatives thereof. As a metallocene catalyst has a high activity, the metallocene catalyst can prepare a polymer having better physical properties than the Ziegler-Natta catalyst. U.S. Patent Serial Nos. 08/844,109 and 08/844,110 disclose new alkyl-bridged binuclear metallocene catalysts, silyl-bridged binuclear metallocene catalysts, and alkyl-silyl-bridged binuclear metallocene catalysts to polymerize styrene monomer to produce polystyrene having a high stereoregularity, a high melting point, and a good molecular weight distribution.

U.S. Patent Serial No. 09/231,884 filed January 14, 1999 discloses a new syndiotactic polystyrene prepared under the catalyst system consisting of a metallocene catalyst and a cocatalyst.

It is preferable to use a syndiotactic polystyrene with a syndiotacticity of 97 % or more in this invention.

### (B) Hydrogenated Styrene/Butadiene/Styrene Block Copolymer (SEBS)

A rubber component is added to the syndiotactic polystyrene resin composition according to the present invention. A hydrogenated styrene/butadiene/styrene block copolymer (SEBS) is preferably used as a rubber component. The rubber component absorbs impact and improves impact strength of the resin composition.

The hydrogenated styrene/butadiene/styrene block copolymer (SEBS) is used in the amount of about 1 ~ 50 parts by weight per 100 parts of the syndiotactic polystyrene.

### (C) Hydrogenated Styrene/Butadiene/Styrene - graft - maleic anhydride (SEBS-MA)

A hydrogenated styrene/butadiene/styrene - graft - maleic anhydride (SEBS-MA) is used in the syndiotactic polystyrene resin composition according to the present invention as a first compatibilizer to improve compatibility between the syndiotactic polystyrene and the rubber component.

The hydrogenated styrene/butadiene/styrene - graft - maleic anhydride (SEBS-MA) is prepared by treating hydrogenated styrene/butadiene/styrene with maleic acid anhydride, which can be carried out by an ordinary skilled person in the art. Also, the hydrogenated styrene/butadiene/styrene - graft - maleic anhydride (SEBS-MA) is commercially available.

The hydrogenated styrene/butadiene/styrene - graft - maleic anhydride (SEBS-MA) is used in the amount of about 1 ~ 15 parts by weight per 100 parts of the syndiotactic polystyrene.

### (D) Polyphenyleneoxide (PPO)

A second compatibilizer is used in the syndiotactic polystyrene resin composition according to the present invention to improve compatibility between the syndiotactic polystyrene and the rubber component. Polyphenyleneoxide (PPO) is preferably used as a second compatibilizer in this invention. Polyphenyleneoxide (PPO) is commercially available.

Polyphenyleneoxide (PPO) is used in the amount of about 1 ~ 90 parts by weight per 100 parts of the syndiotactic polystyrene.

### (E) Phosphoric Acid Ester

A phosphoric acid ester is used in the syndiotactic polystyrene resin composition according to the present invention to provide the resin composition with flame retardancy. The phosphoric acid ester is a halogen-free flame retardant. Resorcinol bis(di-2,6-xylenyl phosphate) can be preferably used. The resin composition containing a phosphoric acid ester of the halogen-free flame retardant forms a great deal of char due to carbonization, dehydration and additional plasticization to provide an improved flame retardancy. The halogen-free flame retardant does neither generate toxic gases which are harmful to human bodies, nor cause an environmental problem.

The phosphoric acid ester is used in the amount of about 1 ~ 60 parts by weight per 100 parts of the syndiotactic polystyrene.

The syndiotactic polystyrene resin composition according to the present invention may optionally include a reinforcing material.

### (F) Glass Fibers

A reinforcing material may be added to the syndiotactic polystyrene resin composition according to the present invention. Glass fibers may be preferably used as a reinforcing material in this invention.

Glass fibers are used in the amount of about 1 ~ 70 parts by weight per 100 parts of the syndiotactic polystyrene.

Other additives may be added to the resin composition of the present invention, when necessary. The additives include an additional flame retardant, a lubricant, a releasing agent, an anti-dripping agent, an impact modifier, a plasticizer, a heat stabilizer, an anti-oxidant, a light stabilizer, pigments, dye and the like. An inorganic filler such as talc, silica, mica or ceramic can be added too. The additives are employed in an amount of about 0 to 40 parts by weight as per 100 parts of the syndiotactic polystyrene.

The invention may be better understood by reference to the following examples which are intended for the purpose of illustration and are not to be construed as in any way limiting the scope of the present invention, which is defined in the claims appended hereto. In the following examples, all parts and percentage are by weight unless otherwise indicated.

### Examples

The components to prepare the syndiotactic polystyrene resin compositions of Examples 1-3 and Comparative Examples 1-2 are as follows:

### (A) Syndiotactic Polystyrene

Syndiotactic polystyrene with syndiotacticity of 97 % was prepared in a glass reactor.

### (B) Hydrogenated Styrene/Butadiene/Styrene Block Copolymer (SEBS)

A commercial product (Kraton G-1651) of Shell Co. was used as SEBS.

### (C) Hydrogenated Styrene/Butadiene/Styrene - graft-maleic anhydride (SEBS-MA)

A commercial product (M-1913) of Asahi Co. of Japan was used as SEBS-MA.

### (D) Polyphenyleneoxide (PPO)

A commercial product of Asahi Co. of Japan was used as PPO.

### (E) Phosphoric Acid Ester

A commercial product (PX-200) of Daihachi Chemical Co. of Japan was used as a phosphoric acid ester in Examples 1-2 and Comparative Examples 1-2. Triphenyl phosphate (TPP) of Daihachi Chemical Co. of Japan was used as a phosphoric acid ester in Example 3.

The components of Examples 1-3 and Comparative Examples 1-2 are shown in Table 1.

**Table 1 (parts by weight)**

| | Examples | | | Comp. Examples | |
|---|---|---|---|---|---|
| | 1 | 2 | 3 | 1 | 2 |
| (A) Syndiotactic Polystyrene | 100 | 100 | 100 | 100 | 100 |
| (B) SEBS | 21.0 | 21.1 | 21.1 | 20.9 | 21.0 |
| (C) SEBS-MA | 5.4 | 5.3 | 5.3 | 5.3 | 5.3 |
| (D) PPO | 71.1 | 88.2 | 88.2 | 5.2 | 38.1 |
| (E) Phosphoric Acid Ester | 26.4¹⁾ | 52.7¹⁾ | 52.7²⁾ | 13.2¹⁾ | 19.7¹⁾ |
| Flame Retardancy | V-1 | V-0 | V-0 | fail | fail |

| | | | | | |
|---|---|---|---|---|---|
| Notes: 1, 2) PX-200 and Triphenyl phosphate (TPP) is made by Daihachi Chemical Co. of Japan | | | | | |

For testing flame retardancy of the resin compositions of Examples 1-3 and Comparative Examples 1-2, specimens of 1/8", 1/16" and 1/32" were prepared and tested in accordance with UL 94. The specimens of Example 1 showed flame retardancy of V-1, and the specimens of Examples 2-3 showed flame retardancy of V-0. The test results were shown in Table 1.

For measuring physical properties of the resin compositions of Examples 1-3, the resin compositions were prepared in pellets in a twin screw extruder at 280°C . The pellets were dried at 80 °C for 3 hours and molded into specimens in a 50 ton injection-molder at 300 °C. The physical properties such as yield strength, breaking strength, elongation, flexural strength and Izod impact strength were measured and shown in Table 2.

**Table 2**

| | Examples | | |
|---|---|---|---|
| | 1 | 2 | 3 |
| yield strength (kgf/cm²) | 647 | 607 | 407 |
| breaking strength (kgf/cm²) | 414 | 466 | 265 |
| elongation (%) | 28 | 40 | 45 |
| flexural strength (kgf/cm²) | 26,300 | 26,160 | 19,380 |
| Izod impact strength (kgf/cm²) | 32 | 24 | 33 |

| | | | |
|---|---|---|---|
| Note: The yield strength, breaking strength and the elongation were measured in accordance with ASTM D638 and flexural strength were measured in accordance with ASTM D790 and Izod impact strength was measured in notched type in accordance with ASTM D256. | | | |

As shown in Table 2, when the flame retardancy improves, the physical properties improve. When the amount of rubber component decreases, the impact strength becomes lower. But the more PPO is employed, that is a function of compatible agent between syndiotactic polystyrene and rubbery phase Therefore, the resin composition according to the present invention has a good flame retardancy and is applicable to articles in which a certain impact strength is not required.

The present invention can be easily carried out by an ordinary skilled person in the art. Many modifications and changes may be deemed to be with the scope of the present invention as defined in the following claims.

## Claims

1. A syndiotactic polystyrene resin composition comprising (a) 100 parts by weight of a syndiotactic polystyrene, (b) about 1 ~ 50 parts by weight of a hydrogenated styrene/butadiene/styrene block copolymer (SEBS) as a rubber component to improve impact strength of the resin composition, (c) about 1 ~ 15 parts by weight of a hydrogenated styrene/butadiene/styrene - graft-maleic anhydride (SEBS-MA) as a first compatibilizer to improve compatibility between the syndiotactic polystyrene and the rubber, (d) about 1 ~ 90 parts by weight of polyphenyleneoxide (PPO) as a second compatibilizer to improve compatibility between the syndiotactic polystyrene and the rubber, and (e) about 1 ~ 60 parts by weight of a phosphoric acid ester as a halogen-free flame retardant.

2. The syndiotactic polystyrene resin composition as defined in claim 1, further comprising about 1 ~ 70 parts by weight of glass fibers per 100 parts of the syndiotactic polystyrene (a).

3. The syndiotactic polystyrene resin composition as defined in claim 1, further comprising an additional flame retardant, a lubricant, a releasing agent, an anti-dripping agent, an impact modifier, a plasticizer, a heat stabilizer, an anti-oxidant, a light stabilizer, pigments, dye and/or an inorganic filler.

4. The syndiotactic polystyrene resin composition as defined in claim 3, wherein said inorganic filler is selected from the group consisting of talc, silica, mica and ceramic.

## Patentansprüche

1. Eine syndiotaktische Polystyrolharzzusammensetzung, umfassend (a) 100 Gewichtsteile eines syndiotaktischen Polystyrols, (b) etwa 1. bis 50 Gewichtsteile eines hydrierten Styrol/Butadien/Styrol-Blockcopolymers (SEBS) als Kautschukkomponente zur Verbesserung der Schlagzähigkeit der Harzzusammensetzung, (c) etwa 1 bis 15 Gewichtsteile eines mit Maleinsäureanhydrid gepfropften hydrierten Styrol/Butadien/Styrol-Blockcopolymers (SEBS-MA) als einen ersten Verträglichkeitsmacher (Compatibilizer) zur Verbesserung der Verträglichkeit zwischen dem syndiotaktischen Polystyrol und dem Kautschuk, (d) etwa 1 bis 90 Gewichtsteile eines Polyphenylenoxids (PPO) als einen zweiten Verträglichkeitsmacher zur Verbesserung der Verträglichkeit zwischen dem syndiotaktischen Polystyrol und dem Kautschuk, und (e) etwa 1 bis 60 Gewichtsteile eines Phosphorsäureesters als einen halogenfreien Flammhemmer.

2. Die syndiotaktische Polystyrolharzzusammensetzung wie in Anspruch 1 definiert, weiterhin umfassend etwa 1 bis 70 Gewichtsteile an Glasfasem pro 100 Teile des syndiotaktischen Polystyrols (a).

3. Die syndiotaktische Polystyrolharzzusammensetzung wie in Anspruch 1 definiert, weiterhin umfassend einen zusätzlichen Flammhemmer, ein Schmiermittel, ein Trennmittel, ein Anti-Tropfmittel, einen Schlagzähigkeitsverbesserer, einen Weichmacher, einen Hitzestabilisator, ein Antioxidationsmittel, einen Lichtstabilisator, Pigmente, einen Farbstoff und/oder einen anorganischen Füllstoff.

4. Die syndiotaktische Polystyrolharzzusammensetzung wie in Anspruch 3 definiert, worin der organische. Füllstoff ausgewählt ist aus der Gruppe, bestehend aus Talk, Kieselsäure, Glimmer und keramischem Material.

## Revendications

1. Composition de résine polystyrène syndiotactique comprenant (a) 100 parties en poids d'un polystyrène syndiotactique, (b) environ 1 à 50 parties en poids d'un copolymère bloc de styrène/butadiène/styrène hydrogéné (SEBS) comme composant caoutchouc pour améliorer la résistance aux chocs de la composition de résine, (c) environ 1 à 15 parties en poids d'un styrène/butadiène/styrène hydrogéné greffé par l'anhydride maléique (SEBS-MA) comme premier agent de compatibilité pour améliorer la compatibilité entre le polystyrène syndiotactique et le caoutchouc, (d) environ 1 à 90 parties en poids de poly(oxyde de phénylène) (PPO) comme second agent de compatibilité pour améliorer la compatibilité entre le polystyrène syndiotactique et le caoutchouc, et (e) environ 1 à 60 parties en poids d'un ester d'acide phosphorique en tant qu'agent ignifuge dépourvu d'halogène.

2. Composition de résine polystyrène syndiotactique selon la revendication 1, comprenant en outre environ 1 à 70 parties en poids de fibres de verre pour 100 parties du polystyrène syndiotactique (a).

3. Composition de résine polystyrène syndiotactique selon la revendication 1, comprenant en outre un agent ignifuge additionnel, un lubrifiant, un agent de démoulage, un agent anti-égouttage, un modificateur de choc, un plastifiant, un stabilisant à la chaleur, un antioxydant, un stabilisant à la lumière, des pigments, une teinte et/ou une charge inorganique.

4. Composition de résine polystyrène syndiotactique selon la revendication 3, dans laquelle ladite charge inorganique est choisie dans le groupe constitué par le talc, la silice, le mica et une céramique.
